# FASCICULE DE BREVET EUROPEEN

(11) **EP 4 152 944 B1**
(45) Date de publication et mention de la délivrance du brevet: **16.07.2025**
(21) Numéro de dépôt: 21734189.0
(22) Date de dépôt: 21.05.2021
(51) Int. Cl.: A23K 10/37, A23K 50/60, A23K 50/90, A23K 20/147, A23K 20/158, A23K 20/163

(54) **METHODE DE FABRICATION DE SUBSTRAT D'ELEVAGE DE LARVES**
VERFAHREN ZUR HERSTELLUNG VON LARVENZUCHTSUBSTRAT
METHOD FOR PRODUCING LARVAE REARING SUBSTRATE

(30) Priorité: 21.05.2020 FR 2005409
(43) Date de publication de la demande: 29.03.2023
(73) Titulaire: Innovafeed, 80190 Nesle (FR)
(72) Inventeur: RAY, Clément, 75010 Paris (FR); HAMELIN, Nicolas, 75010 Paris (FR); LAURO, Alexandre, 75010 Paris (FR)
(74) Mandataire: IP Trust
(86) Numéro de dépôt international: PCT/FR2021/050938
(87) Numéro de publication internationale: WO 2021/234329

(56) Documents cités:
- WO-A1-2019/229396
- US-A1- 2019 343 148
- US-A1- 2020 120 897
- VAN BROEKHOVEN SARAH ET AL: "Growth performance and feed conversion efficiency of three edible mealworm species (Coleoptera: Tenebrionidae) on diets composed of organic by-products", JOURNAL OF INSECT PHYSIOLOGY, PERGAMON PRESS, OXFORD, GB, vol. 73, 7 January 2015 (2015-01-07), pages 1 - 10, XP029204476, ISSN: 0022-1910, DOI: 10.1016/J.JINSPHYS.2014.12.005

## Description

La présente invention a trait au domaine de l'élevage des insectes. Elle concerne plus particulièrement un substrat d'élevage de larves d'insectes préparé à partir de solubles issus de procédés de transformation de végétaux, notamment pour la production d'amidon, de protéines, d'éthanol ou d'huile de palme, son procédé de préparation et une méthode d'élevage utilisant un tel substrat.

### Domaine de l'invention

La production de protéine est l'un des enjeux clés des décennies à venir, avec un déficit qui se creuse dans le monde (60Mt d'ici 2030). Avec 70% des protéines consommées dans le domaine agricole actuellement importées, essentiellement sous forme de tourteaux de soja, l'Europe et les sociétés européennes doivent développer des solutions pour réduire cette dépendance.

Le déficit protéique est particulièrement critique pour le secteur de l'aquaculture. Avec presque la moitié des stocks de poisson sauvages exploités à des niveaux biologiquement insoutenables, l'aquaculture se développe rapidement pour répondre à une demande globale grandissante. D'après le rapport 2016 de la FAO sur la situation mondiale des pêches et de l'aquaculture, la majorité des produits aquatiques proviennent aujourd'hui de l'aquaculture et non plus de la pêche. Avec une croissance de plus de 5% par an, le secteur de l'aquaculture est le secteur de l'agro-alimentaire à la croissance la plus rapide.

L'élevage d'insecte répond à cette problématique en fournissant une source de nutriments à destination de la nutrition animale et de l'agriculture. Ces produits permettent d'introduire de nouvelles sources de protéines plus durables, en particulier dans l'aquaculture, pour laquelle les protéines d'insecte sont particulièrement adaptées.

En effet, la farine d'insecte s'affirme comme une excellente solution pour accompagner la croissance de la pisciculture, dont les sources traditionnelles d'aliment (farine de poissons sauvages ou farine de soja) sont insuffisantes et ont un fort impact environnemental.

D'autre part, les industries de l'amidonnerie, de la production d'éthanol, de protéines et d'huile de palme génèrent des coproduits végétaux exploitables en tant que sources de protéines, de lipides et de glucides. Ces coproduits peuvent être utilisés pour fabriquer des milieux d'élevages de larves d'insectes.

Les industries de transformation des plantes en produits dérivés incluent les industries de production de l'amidon (généralement à partir de céréales, en particulier le blé ou le maïs, mais aussi de pommes de terre), de bioalcool (bioéthanol, généralement à partir de maïs, mais aussi possiblement d'autres céréales), de protéines (à partir de protéagineux, comme les pois) et d'huile (à partir notamment d'huile de palme à partir du fruit du palmier à huile et d'huile de palmiste à partir de noyaux du fruit du palmier à huile).

D'une façon générale, les procédés industriels sont des procédés dans lesquels on isole les composés recherchés par des méthodes mécaniques (broyage, séparation de différentes fractions pour l'amidonnerie ou la préparation de protéines), qui peuvent aussi inclure des étapes de fermentation et distillation (production de bioéthanol). Ces procédés utilisent beaucoup d'eau, notamment dans les étapes de séparation, et mènent à des coproduits, appelés solubles, qui sont essentiellement des compositions aqueuses contenant des composés issus de la plantes (lipides, protéines, sucres...) solubles dans la phase aqueuse, et qui sont des coproduits du procédé principal.

Ces solubles peuvent être complémentés par d'autres coproduits de ces procédés industriels et sont aujourd'hui généralement séchés, ce qui concentre les composants, et les compositions résultantes, se présentant sous forme de granulés (teneur en humidité généralement inférieure à 15%) sont utilisés notamment en nutrition animale. Toutefois, cette étape de séchage, nécessaire pour obtenir des compositions acceptables pour être transportées et convenir aux besoins d'élevages de bétail, demande beaucoup d'énergie.

Le document US2019/343148 décrit l'utilisation de ces solubles sous forme de blocs solides gélifiés pour l'alimentation de larves d'insectes.

### Exposé de l'invention

La Demanderesse a montré que ces solubles pouvaient être utilisés pour fabriquer des milieux d'élevage de larves d'insectes.

Ainsi l'invention concerne un substrat d'élevage de larves d'insectes sous forme grumeleuse et de texture semi-liquide ou pâteuse comprenant :
- des solubles issus de procédés de transformation de végétaux, et
- des coproduits végétaux sous forme solide.

L'invention concerne également un procédé de préparation d'un substrat d'élevage de larves d'insectes ainsi qu'une méthode d'élevage de larves d'insectes utilisant un substrat tel que défini précédemment.

### Avantages de l'invention

Le substrat d'élevage de larves, objet de l'invention, présente plusieurs avantages.

En particulier, il permet aux larves de vivre, de se déplacer et de se nourrir dans un milieu unique, sans qu'il soit nécessaire de changer ce milieu ou d'apporter d'autres sources de nutriments aux larves. Ce substrat d'élevage par ses caractéristiques de texture grumeleuse, semi-liquide ou pâteuse (de style « porridge ») et homogène permet aux larves d'avoir accès aux nutriments et de boire pendant toute la durée de l'élevage sans risque de noyade. A la fin de l'élevage, le substrat est sec, ce qui permet de séparer les larves et de les récupérer sans difficulté.

Le substrat et son procédé de préparation décrits dans la présente demande sont particulièrement intéressants en ce qu'ils utilisent les solubles « tels quels » à la sortie des procédés industriels de transformation de végétaux, et que l'ajout de composants solides, eux-mêmes issus de la filière d'agro-transformation, permettent de modifier la texture, et la composition nutritionnelle et d'obtenir ainsi les milieux d'élevage utilisables pour les larves. On peut aussi noter que ces milieux présentent un taux d'humidité bien supérieur aux autres aliments proposés pour l'élevage de larves obtenus à partir des solubles (éventuellement complémentés) qui sont généralement sous forme de granulés.

Un autre avantage de l'utilisation de solubles « tel quel » est de s'affranchir de la nécessité de séchage de ces solubles (procédé actuellement mis en oeuvre par les industries de transformation), ce qui permet une économie d'énergie et un gain économique en comparaison des utilisations actuelles de ces solubles.

De manière générale, les solubles utilisables dans le cadre de la présente invention peuvent être obtenus par tout traitement/procédé de transformation de produits ou coproduits végétaux permettant d'extraire et/ou de solubiliser les nutriments qu'ils contiennent.

Les substrat, procédé de préparation et méthode d'élevage décrits ci-après sont préférentiellement mis en oeuvre dans des installations qui sont géographiquement proches des usines de transformation des végétaux. En effet, ceci permet d'éviter le transport de larges volumes de solubles. Ainsi, de préférence, ces procédés et utilisations sont mis en oeuvre à partir des solubles provenant de tuyaux directement branchés dans les usines de transformation de végétaux, et amenant les solubles aux installations dans lesquelles ils sont mélangés aux compléments pour donner les milieux d'élevage de larves d'insectes. De manière préférée, les transformations de végétaux (par exemple pour la production d'amidon, de bioéthanol, de protéines) et les procédés et méthodes ici décrites sont mis en oeuvre « en continu », c'est-à-dire que les solubles ne sont pas stockés plus de 24 heures entre leur obtention en tant que coproduit des procédés de transformation des végétaux et leur utilisation dans les procédés de préparation de substrat d'élevage. Ceci permet également de réduire les coûts de stockage de ces solubles. Dans le cas de l'utilisation de coproduits de l'huile de palme qui peuvent se conserver plus longtemps avant utilisation, un stockage est possible, offrant plus de flexibilité dans la chaîne industrielle.

La présente invention permet donc de résoudre les problèmes
- de consommation d'énergie (liés au séchage des solubles),
- de stockage (notamment lorsque les unités de transformation de végétaux et de fabrication des milieux d'élevage sont proches géographiquement (séparées de moins de 50 km généralement, voire de moins de 20 km, de préférence 10 km ou moins et que les solubles sont utilisés rapidement (quelques heures) après obtention)
- de valorisation de ces solubles (valorisation indirecte *via* la valorisation des sousproduits obtenus à partir des larves et insectes élevés), et
- de traitement des effluents et/ou de pollution (dans le cas des effluents de l'huile de palme).

Il est appréciable que les unités de transformation de végétaux et celles de fabrication des substrats d'élevage soient suffisamment proches afin que l'on puisse envoyer les solubles de celles-là à celles-ci par le biais de canalisations ou tuyaux.

### DESCRIPTION DETAILLEE DE L'INVENTION

Un premier objet de l'invention concerne un substrat d'élevage de larves d'insectes sous forme grumeleuse et de texture semi-liquide ou pâteuse comprenant :
- des solubles issus de procédés de transformation de végétaux, et
- des coproduits végétaux sous forme solide.

Ainsi, l'invention se rapporte à l'utilisation de solubles issus de procédés de transformation de plantes, pour la préparation d'une composition destinée à l'élevage de larves d'insectes.

Ce « substrat », aussi appelé « milieu d'élevage » est une composition destinée à l'élevage de larves d'insectes ; elle est nutritive et sert de support physique aux larves du fait de ses propriétés mécaniques particulières (décrites ci-après).

Dans un mode de réalisation préféré de l'invention, les solubles sont issus de procédés de transformation de végétaux pour la production d'amidon, de protéines, d'éthanol ou d'huile de palme.

On peut décrire notamment les procédés industriels suivants, produisant des solubles utilisables dans le cadre de l'invention :
- Production d'éthanol à partir de blé (ou d'une autre céréale à paille) : la production d'éthanol est effectuée à partir de fractions solubles récupérées lors de l'extraction de l'amidon, qui sont mises à fermenter puis distillées. Les solubles de distillation (ce qui n'est pas l'alcool), aussi appelés « vinasses » sont parfaitement adaptés à la mise en oeuvre de l'invention. Ces solubles présentent un taux de matière sèche compris entre 8 et 12% pour les vinasses non évaporées, entre 12 et 35% pour les vinasses évaporées.
- Solubles issus de l'industrie amidonnière sans distillation (blé ou autre céréale à paille) : il s'agit des solubles utilisables pour la distillation (ci-dessus), préférentiellement concentrés par évaporation (pour obtenir taux de matière sèche à 12-25%). Ces solubles sont obtenus après mélange de la farine avec de l'eau pour former une pâte permettant la séparation de l'amidon et du gluten par lavage. Les solubles utilisables sont les eaux chargées en nutriments issues de ce processus de séparation.
- Production d'éthanol à partir de maïs : le maïs (nettoyé) est placé dans de l'eau de trempage (ou de trempe) qui fait gonfler les grains et permet d'en séparer les composants solubles. Cette eau de trempe est alors fermentée et distillée. Les solubles utilisables dans la présente demande sont les résidus de la distillation (ce qui n'est pas l'alcool). Ils ont généralement un taux de matière sèche compris entre 20% et 50%. Cette eau de trempe pourrait être utilisée directement, ou éventuellement concentrée.
- Production de protéines à partir de protéagineux (pois) : ces procédés incluent d'abord une extraction de l'amidon et d'une partie des protéines, puis une extraction des extraits protéiques par coagulation de jus de protéine. Les solubles utilisables sont la fraction liquide post-coagulation, préférentiellement concentrée par évaporation jusqu'à 20-32% de matière sèche.
- Production d'huiles à partir d'oléagineux : ces procédés donnent des coproduits qui se présentent sous la forme de solutions aqueuses contenant des nutriments, en particulier protéines, lipides et/ou glucides. Des coproduits issus d'oléagineux d'intérêt sont ceux issus de l'industrie de l'huile de palme. Il s'agit de coproduits et effluents issus des procédés de production d'huile de palme (*Crude Palm Oil*) et/ou d'huile de palmiste (*Palm Kernel Oil*) et/ou de raffinerie de l'huile de palme ou d'huile de palmiste. De manière plus spécifique, les solubles issus de l'industrie de l'huile de palme utilisables dans la présente demande sont les effluents de moulins à huile de palme, le plus souvent qualifiés de *Palm Oil Mill Effluents* (POME). Les POME peuvent regrouper une partie ou toutes les eaux du procédé de stérilisation, extraction et clarification de l'huile de palme. Ce sont des liquides très fluides ou pâteux (1 à 40% de matière sèche) chargés en matières organiques, fibres et huiles résiduelles. Les POME regroupent aussi les boues de moulin à huile de palme (ou *Palm Oil Mill Sludge*) contenant de 1 à 25% de matière sèche, le gâteau de décanteur (ou *Decanter cake*) contenant de 10 à 40% de matière sèche.

Ainsi, les solubles tels qu'utilisables dans le cadre de l'invention sont très variables, tant dans leur origine, que dans leur composition (taux de matière sèche ou de nutriments). Ils présentent toutefois tous des sources de protéines solubles et potentiellement de composants glucidiques aujourd'hui valorisés en méthanisation, en biomasse pour la production d'énergie ou en tant que granulés pour l'alimentation animale après séchage, ce qui est énergivore.

La Demanderesse a montré que ces produits solubles peuvent être mélangés à d'autres coproduits végétaux sous forme solide, afin d'obtenir un substrat d'élevage ayant à la fois une composition nutritionnelle et une texture adaptée à la croissance de larves d'insectes. Ces coproduits végétaux sous forme solides peuvent être choisis parmi le son de blé, compacté ou non, les fibres de maïs, compactées ou non, les gâteaux de centrifugation et les coproduits solides issus de l'industrie de l'huile de palme.

En effet, l'industrie de l'huile de palme produit des coproduits solides végétaux qui peuvent être mélangés aux solubles pour apporter de la texture recherchée au substrat d'élevage. Ils regroupent :
- la grappe de palmier à huiles vide (*Empty Fruit Bunch,* EFB) après stérilisation de la grappe fraîche
- les fibres de palmier à huile qui sont le résidu fibreux de la séparation de l'huile de palme (ou *Crude Palm Oil*) des fruits stérilisés (*Palm Fiber*)*,*
- les tourteaux de palmistes qui contiennent de 80 à 98% de matière sèche ; ils sont aussi appelés PKC (pour,) et regroupent les PKE (*Palm Kernel Expeller*) et PKM (*Palm Kernel Meal*)*.* Ce sont les co-produits de l'extraction de l'huile de palmiste (*Palm Kernel Oil*) obtenus par un processus d'extraction mécanique ou par solvant.

Dans un mode de réalisation particulier de l'invention, le substrat est obtenu par mélange de coproduits issus de l'industrie de l'huile de palme à savoir (i) des solubles obtenus à partir d'effluents de moulin à huile de palme (POME), d'effluents du processus de raffinage de l'huile de palme et/ou de l'huile de noyaux de fruit de palmier à huile et (ii) des solides choisis parmi les tourteaux de palmiste non fermentés (PKC), et les tourteaux de palmiste fermentés, les fibres de palmier à huile et les grappes de palmier à huiles vides.

Le substrat d'élevage est caractérisé par une texture spécifique et évolutive permettant de garantir les conditions d'élevage optimales durant l'ensemble de la croissance des larves, d'un point de vue zootechnique, énergétique et économique.
- En début d'élevage, la texture est grumeleuse, semi-liquide ou pâteuse : elle garantit un premier accès aux nutriments et la mobilité des larves, leur permettant de coloniser naturellement le milieu sans intervention extérieure. Le taux d'humidité élevé du substrat permet aux larves de boire, alors que sa texture grumeleuse forme un support qui empêche les larves de se noyer. En effet, la présence dans le mélange d'une fraction sèche initiale (ex : son de blé, fibres de maïs, autre) permet de retenir l'eau tout en évitant la présence d'eau apparente, qui s'évapore rapidement et peut ainsi provoquer un assèchement précoce, et donc la perte de possibilité pour la larve d'ingérer les nutriments. La présence d'eau apparente serait également nuisible à la survie de la larve qui aurait des difficultés pour se déplacer et pour respirer dans un milieu aqueux
- En cours d'élevage, la texture évolue progressivement vers un état plus sec tout en maintenant une humidité homogène, sans présence d'eau apparente : elle garantit que toutes les larves aient accès au même substrat et aux mêmes nutriments tout au long de la phase de consommation, tout en s'abreuvant naturellement, sans dispositif ou additif supplémentaire et sans intervention extérieure ;
- En fin d'élevage, la texture s'apparente à un milieu granulaire sec composé de coproduits digérés : elle garantit une séparation mécanique optimale entre les larves et les résidus, qui seront transformés et valorisés séparément ensuite.

Cette texture optimisée du substrat d'élevage est ainsi obtenue par ajustement du taux d'humidité initial entre 65% et 80%, grâce à des combinaisons de coproduits listés précédemment, et le cas échéant, ajout d'eau. Les nutriments présents dans les solubles (protéines solubles, polypeptides et glucides) permettent d'accélérer et d'améliorer la croissance de larves d'insectes.

De manière générale, les compositions utilisées comme substrat d'élevage de larves d'insectes se présentent sous une forme grumeleuse (de texture semi-liquide ou pâteuse) et comprennent entre 20% et 35% de matière sèche, entre 8% et 30% de protéines (sur matière sèche), et entre 1% et 16% de lipides (sur matière sèche) et/ou entre 0% et 70% de glucides (sur matière sèche).

Des compositions particulières selon l'invention, obtenues à partir de solubles issus de procédés de transformation de végétaux pour la production d'amidon, de protéines, d'éthanol, peuvent être caractérisées par les données suivantes :
- Taux de matière sèche : compris entre 20% et 35%
- Taux de protéines : compris entre 12% et 30% sur matière sèche
- Taux de glucides : compris entre 12% et 30% sur matière sèche et/ou
- Taux de lipides : compris entre 3% et 6% sur matière sèche et/ou
- Taux de cendres : compris entre 2% et 10% sur matière sèche.

D'autres compositions particulières selon l'invention, obtenues à partir de solubles issus de procédés de transformation de l'huile de palme, peuvent être caractérisées par les données suivantes :
- Taux de matière sèche : compris entre 20% et 35%
- Taux de protéines : compris entre 10% et 25% sur matière sèche
- Taux de glucides : compris entre 0% et 70% sur matière sèche
- Taux de lipides : compris entre 1% et 16% sur matière sèche

Ces compositions sont parfaitement adaptées à l'élevage de larves d'insectes. En particulier, on peut citer les diptères *Hermetia Illucens, Musca Domestica,* les coléoptères *Tenebrio Molitor, Alphitobius diaperinus* ainsi que les criquets *Acheta domesticus, Gryllodes sigillatus* ou Field Cricket *Gryllus assimilis,* et de manière préférée, particulièrement adapté à l'élevage de larves de *Hermetia illucens.*

Un deuxième objet de l'invention concerne un procédé de préparation d'un substrat d'élevage de larves d'insectes sous forme grumeleuse et de texture semi-liquide ou pâteuse comprenant le mélange (i) de solubles issus de procédés de transformation de végétaux, et (ii) de coproduits végétaux sous forme solide.

En particulier, la Demanderesse a montré que l'on peut mélanger les solubles avec des coproduits végétaux solides tels que du son de blé, compacté ou non, avec des fibres de maïs, compactées ou non, (aussi appelées *Fine Corn Gluten Feed* ou *Coarse Corn Gluten Feed*), du gâteau de centrifugation (aussi appelé *Wet Cake*) et des tourteaux de palmiste (aussi appelés PKC, PKM, PKE). Le mélange, par ajout des solubles à ces compléments, sous agitation constante, permet d'obtenir une composition se présentant sous forme grumeleuse, mélange de fraction liquide et granulaire, d'une texture semi-liquide ou pâteuse (mais présentant quelques grumeaux, correspondant aux compléments ajoutés au solubles).

Il est également décrit l'utilisation de solubles issus des procédés de transformation de végétaux, notamment pour la production d'amidon, de protéines, d'éthanol ou de l'huile de palme, en particulier tels que décrits précédemment, et dans les exemples, pour la préparation d'une composition destinée à l'élevage de larves d'insectes.

Ainsi que vu plus haut, les solubles sont complémentés par des composés permettant l'obtention de la texture voulue, et afin que la composition de substrat comprenne entre 20% et 35% de matière sèche, entre 8 et 30% de protéines (sur matière sèche), entre 1 et 16% de lipides (sur matière sèche) et/ou entre 0% et 70% de glucides (sur matière sèche), de préférence entre 12 à 30% de glucides. Dans un mode de réalisation particulier, le substrat comprend entre 15% et 30% de protéines, et préférentiellement entre 3% et 6% de lipides et/ou entre 12% et 30% de glucides.

Les coproduits solides sources de protéines, lipides et/ou glucides, ajoutées aux solubles en tant que compléments sont préférentiellement choisies parmi les issus de blé, en particulier le son de blé compacté ou non, les fibres de maïs compactées ou non, les gâteaux de centrifugation et les tourteaux de palmiste.

Les issues de blé sont des coproduits de l'industrie de première transformation du blé (meunerie, semoulerie, amidonnerie) et sont obtenus lors de la fabrication de la farine et de la semoule. Les issues sont constituées principalement des fragments de l'enveloppe des grains de blé et de particules de grains dont l'albumen a été retiré. Les issues de blé sont principalement les sons, remoulages, farines basses et germes et représentent en moyenne 25 à 30 % du grain de blé. Les issues de blé contiennent des protéines, et autres constituants.

**Tableau 1 : Constituants de certaines issues de blé**

| **Constituants** | **Son** | **Remoulage** | **Germe** |
|---|---|---|---|
| Humidité | 13,1 | 12,0 | 10,5 |
| Protéines | 15,3 | 15,7 | 30,0 |
| Parois végétales ("Fibres") | 39 | 30,2 | 14,5 |
| Amidon | 19,3 | 28,5 | 20,3 |
| Lipides | 2,6 | 3,1 | 10 |
| Sels minéraux | 4,9 | 4,1 | 4,0 |

Dans un mode de réalisation préféré, la composition est préparée en continu à partir des solubles. On entend indiquer que la composition est préparée à partir de solubles envoyés directement par des tuyaux ou canalisations dans les installations de préparation, sans qu'il n'y ait de transport routier entre les installations de transformation des végétaux et les installations de préparation des substrats d'élevage. Dans un autre mode de réalisation, les solubles sont transportés dans les installations de préparation de substrat, celles-ci étant située à courte distance (moins de 50km, mais de préférence 20 km ou moins) des installations de transformation des végétaux. Une distance trop importante augmente les coûts de transport et diminue la rentabilité des procédés. On peut stocker les solubles dans les installations de préparation des substrats d'élevage, mais ce stockage est généralement court, ainsi que vu plus haut, même si ceci est moins vrai dans le cas de coproduits stables à la conservation.

Après réception des solubles dans les installations de préparation du substrat d'élevage, ceux-ci sont analysés. On détermine en particulier leur teneur en matière sèche, leur teneur en protéines, lipides, glucides, fibres... En fonction de la composition du soluble, on peut déterminer la quantité de complément (notamment le son de blé) que l'on doit mélanger pour obtenir la texture et la composition recherchée pour le substrat d'élevage. Ces éléments sont déterminés aisément par l'homme du métier qui dispose des outils appropriés pour effectuer les mesures de composition dans les solubles et les compléments ajoutés.

L'invention se rapporte ainsi à un procédé (ou une méthode) de fabrication d'un substrat d'élevage de larves d'insectes à partir de solubles issus de coproduits végétaux, notamment issus de la production d'amidon, d'éthanol à partir de maïs ou blé ou d'huile de palme, comprenant le mélange de ces solubles, avec des sources de protéines, lipides et/ou glucides (coproduit végétaux solide) afin d'obtenir une composition comprenant entre 20% et 35% de matière sèche, entre 8% et 30% de protéines (sur matière sèche), et préférentiellement entre 3% et 16% de lipides (sur matière sèche) et/ou entre 0% et 30% de glucides (sur matière sèche).

Dans un mode de préparation particulier, on ajoute du son de blé compacté ou non aux solubles, avec éventuellement d'autres compléments. Le son de blé permet notamment d'obtenir les compléments nutritionnels pour obtenir la teneur souhaitée dans le substrat, de réduire l'humidité, et d'obtenir la texture grumeleuse semi-liquide recherchée.

Le substrat d'élevage est notamment préparé par un ajout graduel des solubles liquides à des issus de blé, en particulier du son de blé compacté ou non, et/ou des fibres de maïs compactées ou non, et/ou du gâteau de centrifugation et/ou des issus de l'industrie de l'huile de palme et en particulier des tourteaux de palmiste en maintenant un mélange continu durant cette incorporation. Ce mélange peut être réalisé dans un mélangeur ou un malaxeur solide / liquide. Afin d'obtenir un substrat homogène, on préfère ajouter les solubles au fur et à mesure en mélangeant de façon continuelle pour bien incorporer les extraits solides (issus de blé, fibres de maïs, gâteaux de centrifugation, tourteaux de palmiste...) aux solubles, et éviter la formation de grappes (clusters) qui contiendrait des solides non hydratés et laisseraient des poches d'eau libre.

Un troisième objet de l'invention concerne une méthode d'élevage de larves d'insectes consistant à :
- déposer les larves au stade de jeunes larves sur un substrat tel que défini précédemment.
- incuber les larves pendant 1 à 60 jours, à une température comprise entre 25 et 45°C
- récupérer les larves en les séparant des résidus et déjections.

Dans un mode de réalisation préféré, cette méthode ne nécessite pas de renouveler le substrat pendant le cycle d'élevage. Le substrat est disposé au début de l'élevage et fournit l'ensemble des nutriments utiles pendant toute la durée de la croissance de la larve, en qualité et quantité suffisantes.

Il est également décrit l'utilisation d'un milieu d'élevage tel que fabriqué et décrit précédemment pour l'élevage de larves d'insectes, ainsi qu'à un procédé d'élevage de larves d'insectes, comprenant l'incubation de larves d'insectes sur un tel substrat, dans des conditions de température et humidité adéquates, et éventuellement la récupération des larves après 1 à 60 jours d'incubation. Un intérêt du substrat et de son utilisation est qu'il n'est pas nécessaire de le changer ou le renouveler fréquemment (il peut être utilisé pendant plus d'une dizaine de jours), et que l'on peut donc effectuer un cycle complet d'élevage sur un seul lot de substrat. Dans un mode de réalisation particulier décrit ici, il est précisé que le substrat ne contient pas d'agent gélifiant.

Généralement, les larves sont déposées sur le substrat d'élevage au stade de jeunes larves, puis croissent à une température comprise entre 25 et 45°C, à un taux d'humidité compris entre 30 et 90%, pendant une durée comprise entre 1 et 60 jours, en fonction de l'insecte considéré.

On peut alors prélever les insectes au stade de développement de larves ou de pupes. Les larves peuvent être utilisée pour produire des aliments hyperprotéinés (notamment destinés à l'aquaculture) des huiles ou des engrais organiques ; les pupes peuvent être utilisées pour produire des adultes reproducteurs afin de générer les nouvelles générations d'insectes.

### DESCRIPTION DES FIGURES

**Figure 1** : composition présentant une structure conforme. On voit que la composition est homogène, et grumeleuse.
**Figure 2** : composition présentant une structure non conforme. Les flèches montrent des poches d'eau apparente ou libre.

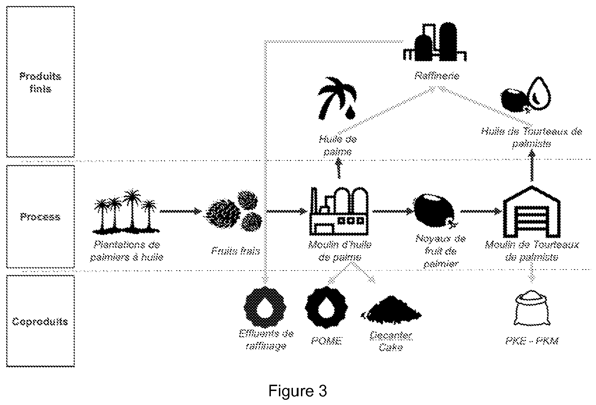

**Figure 3** **:** Vue schématique du procédé industriel de transformation des fruits de palmier à huile.

### EXEMPLES

### Exemple 1. Production de solubles issus de la distillation de blé

- Matière première : Blé
- Procédé
   ∘ Dans une amidonnerie, le gluten est séparé du lait d'amidon qui est chauffé par injections de vapeur et ensuite transformé en glucose par voie enzymatique. Une partie de ce lait d'amidon faiblement concentré est emmenée dans un atelier de fermentation.
   ∘ i) Fermentation : une fraction du lait d'amidon est emmenée à l'atelier de fermentation où il est ensuite traité avec des levures dont la fermentation permet d'obtenir un liquide alcoolisé à 10°
   ∘ ii) Distillation : Ce liquide alcoolisé est ensuite distillé dans un atelier de distillation pour produire de l'alcool à 92% vol. Les résidus de cette étape constituent le soluble utilisable pour la préparation du substrat pour l'élevage des insectes. Il s'agit d'un soluble entre 8 et 12% de matière sèche, appelé communément vinasse, contenant des protéines solubles résiduelles et des polypeptides d'intérêt notamment pour la nutrition d'*Hermetia Illucens.* Ces solubles peuvent être utilisés directement ou bien subir l'une, l'autre ou les deux transformations suivantes :
   ∘ iii) Centrifugation : permettant de séparer deux phases des vinasses. L'une riches en protéine, la seconde plus pauvre. La phase la plus pauvre en protéine conserve les propriétés souhaitées pour la nutrition d'*Hermetia Illucens*
   ∘ iv) Evaporation : a pour but de concentrer les vinasses en les portant à un taux de matière sèche supérieure s'établissant à 12-35% de matière sèche
- Les solubles issus de ce procédé ont donc une composition :
   ∘ Taux de matière sèche : compris entre 8 et 12% pour les vinasses non évaporées, entre 12 et 35% pour les vinasses évaporées
   ∘ Taux de protéines : compris entre 20% et 28% sur matière sèche
   ∘ Taux de glucides : compris entre 2% et 6% sur matière sèche
   ∘ Taux de lipides : compris entre 2% et 6% sur matière sèche
   ∘ Taux de cendres : compris entre 6% et 10% sur matière sèche
- Compléments
   ∘ L'ajout de son de blé compacté ou non, ou de gâteau de centrifugation (*Wet Cake*), permet d'augmenter la matière sèche et d'obtenir la texture et la composition nécessaire pour permettre l'élevage de larves
- Ces solubles sont connus dans l'art et généralement appelés « vinasses », « stillage », « heavy stillage », « whole stillage » ou « thin stillage »

### Exemple 2. Production de solubles issus de la transformation du blé

- Matière première : Blé
- Procédé
   o On utilise la fraction du lait d'amidon susceptible d'être envoyée dans un atelier de fermentation. Cette fraction du lait d'amidon qui contient donc des sucres résiduels et se présente sous forme liquide contenant entre 8 et 12% de matière sèche, appelé communément « soluble de blé » ou « wheat liquid feed ». Ces solubles peuvent être utilisés directement ou bien subir une étape de concentration par évaporation, afin de concentrer les solubles en les portant à un taux de matière sèche supérieure s'établissant à 12-25% de matière sèche
- Composition
   o Taux de matière sèche : compris entre 8 et 12% pour les solubles non évaporés, entre 12 et 25% pour les solubles évaporés
   o Taux de protéines : compris entre 15% et 21% sur matière sèche
   o Taux de glucides : compris entre 25% et 70% sur matière sèche
   o Taux de lipides : compris entre 2% et 6% sur matière sèche
   o Taux de cendres : compris entre 1% et 5% sur matière sèche
- Compléments
   o L'ajout de son de blé permet d'augmenter la matière sèche et d'obtenir la texture et la composition nécessaire pour permettre l'élevage de larves
- Appellations techniques (liste non exhaustive) : « solubles », « wheat liquid feed »

### Exemple 3. Production de solubles issus de la distillation à partir de maïs

- Matière première : Maïs
- Procédé
   ∘ Les eaux de trempe sont envoyées dans un atelier de fermentation et sont inoculées avec des levures pour obtenir un liquide alcoolisé par fermentation
   ∘ Distillation : Ce liquide alcoolisé est ensuite distillé dans un atelier de distillation pour produire de l'alcool à 92% vol. Les résidus de cette étape appelé communément « stillage », contiennent des protéines solubles résiduelles et des polypeptides d'intérêt pour la nutrition d'*Hermetia Illucens.*
   ∘ Ces solubles peuvent être utilisés directement ou bien subir une étape de concentration par évaporation, afin de concentrer les solubles en les portant à un taux de matière sèche supérieure s'établissant à 20-50% de matière sèche. Après évaporation ces solubles sont appelés « *Heavy stillage* »
- Composition
   ∘ Taux de matière sèche : compris entre 20% et 50%
   ∘ Taux de protéines : compris entre 25% et 40% sur matière sèche
   ∘ Taux de glucides : compris entre 3% et 6% sur matière sèche
   ∘ Taux de lipides : compris entre 2% et 6% sur matière sèche
   ∘ Taux de cendres : compris entre 1% et 5% sur matière sèche
- Compléments
   ∘ On peut ajouter des fibres de maïs compactées ou non (*Fine Corn Gluten Feed ou Coarse Corn Gluten Feed*) ou du gâteau de centrifugation (*Wet Cake*) ou encore du son de blé compacté ou non pour obtenir les composition et texture recherchées
- Appellations techniques (liste non exhaustive) : « vinasses », « stillage », « heavy stillage », « whole stillage », « thin stillage »

### Exemple 4. Production de soluble par extraction de protéines à partir de pois jaune

- Matière première : Pois jaune
- Procédé
   ∘ La crème de pois est composée de deux co-produits humides obtenus lors du raffinage par voie humide des pois jaunes après extraction de l'amidon et d'une partie des protéines : la pulpe de pois humide et les solubles concentrés de pois
   ∘ Après extraction de l'amidon, la pulpe de pois humide est obtenue par pressurage du gâteau résultant de la décantation
   ∘ Après la décantation, l'extraction de la protéine de pois se fait par coagulation du jus de protéine
   ∘ La fraction liquide post coagulation est ensuite concentrée par évaporation jusqu'à 28-30% de matière sèche pour obtenir du soluble de pois
   ∘ La pulpe est ensuite incorporée au soluble pour obtenir une crème de pois sous forme de liquide blanchâtre
- On mélange du son de blé au soluble ou à la crème de pois pour obtenir une composition de substrat d'élevage de larves d'insectes.

### Exemple 5. Préparation de substrats d'élevage

On a récupéré des solubles issus des procédés des exemples 1 à 4.

On a ajouté ces solubles à du son de blé:
On a mélangé dans un mélasseur solide / liquide à flux continu (appareil permettant l'incorporation de liquides à des matériaux granulaires) en injectant les solubles dans le matériel granulaire des compléments, à une température comprise entre 20°C et 70°C et
en contrôlant en continu les volumes ajoutés et le taux d'humidité.

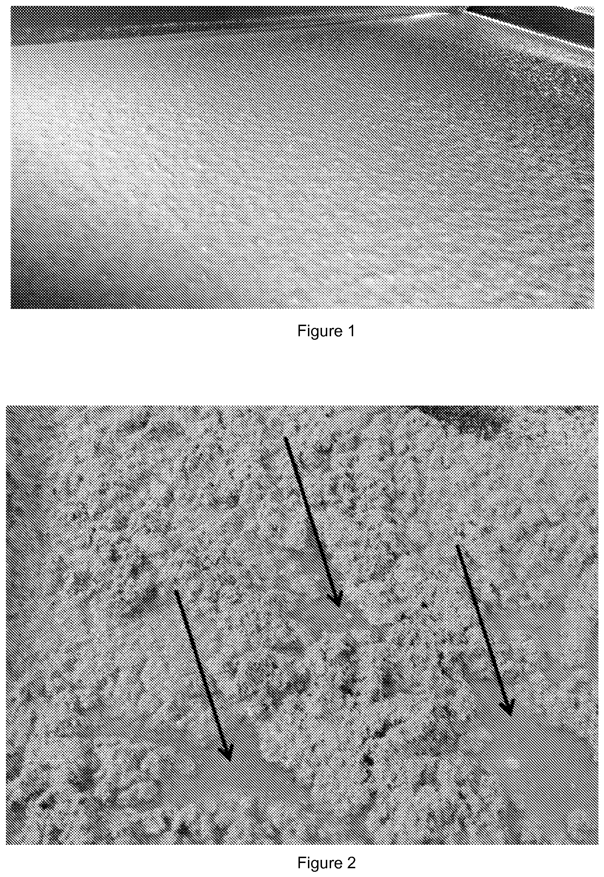

On a ainsi obtenu une composition (figure 1A) qui présente les caractéristiques suivantes :
- Se présente sous la forme d'une composition grumeleuse (semi-liquide)
- Entre 20% et 35% de matière sèche
- Entre 15% et 30% de protéines (sur matière sèche)
- Entre 3% et 6% de lipides (sur matière sèche)
- Entre 12% et 30% de glucides (sur matière sèche).

Cette composition a été utilisée comme milieu d'élevage de larves de *Hermetia Illucens* : 1kg de jeunes larves (3 jours) ont été déposées sur 50kg de milieu et ont été placées dans une pièce à 30°C, sans luminosité.

Les larves ont crû et ont été récoltées au bout de 7 jours (stade de développement), puis ont été utilisées dans des procédés de transformations thermo-mécaniques permettant d'extraire les lipides et les farines protéiques.

### Exemple 6. Préparation d'un substrat d'élevage à partir de coproduits de l'huile de palme

- Matière première : fruit de palmier à huile
- Procédé
   ∘ On utilise les effluents de moulin à huile de palme (POME) susceptibles d'être envoyés dans des étangs de décantation ou d'être centrifugés et/ou décantés. Ces effluents contiennent donc matières organiques, fibres et huiles résiduelles et se présentent sous forme liquide contenant entre 1 et 40% de matière sèche. Ces solubles selon l'étape de récupération dans le processus de traitement des effluents peuvent être utilisés directement ou bien subir une étape d'humidification par ajout d'eau en les portant à un taux de matière sèche inférieur s'établissant à 1-15% de matière sèche.
   ∘ On a ajouté ces solubles à des tourteaux de palmiste (PKC) fermentés contenant de 50 à 98% de matière sèche, ou non fermentés contenant de 80 à 98% de matière sèche :
- Composition
   ∘ Taux de matière sèche : compris entre 1% et 25 %
   ∘ Taux de protéines : compris entre 8% et 20% sur matière sèche
   ∘ Taux de glucides : compris entre 25% et 70% sur matière sèche
   ∘ Taux de lipides : compris entre 3% et 16% sur matière sèche
- Compléments

L'ajout de tourteaux de palmiste (PKC) fermentés ou non permet d'augmenter la matière sèche et d'obtenir la texture et la composition voulue pour permettre l'élevage de larves.

## Revendications

1. Substrat d'élevage de larves d'insectes sous forme grumeleuse et de texture semi-liquide ou pâteuse comprenant :
- des solubles issus de procédés de transformation de végétaux, et
- des coproduits végétaux sous forme solide.

2. Substrat selon la revendication 1 dans lequel lesdits solubles sont issus de procédé de transformation de végétaux pour la production d'amidon, de protéines, d'éthanol ou d'huile de palme.

3. Substrat selon la revendication 2 **caractérisé en ce que** lesdits solubles issus de procédés de production d'huile de palme sont obtenus à partir d'effluents de moulin à huile de palme (POME).

4. Substrat selon l'une des revendications précédentes **caractérisé en ce que** lesdits coproduits végétaux solides sont choisis parmi les issues de blé, en particulier le son de blé compacté ou non, les fibres de maïs compactées ou non, les gâteaux de centrifugation, les tourteaux de palmistes.

5. Substrat selon l'une des revendications précédentes **caractérisé en ce qu'**il présente un taux d'humidité compris entre 65 et 80%.

6. Substrat selon l'une des revendications précédentes **caractérisé en ce qu'**il comprend entre 20% et 35% de matière sèche, entre 8% et 30% de protéines (sur matière sèche), et préférentiellement entre 3% et 16% de lipides (sur matière sèche) et/ou entre 0% et 70% de glucides (sur matière sèche).

7. Procédé de préparation d'un substrat d'élevage de larves d'insectes sous forme grumeleuse et de texture semi-liquide ou pâteuse comprenant le mélange de solubles issus de procédés de transformation de végétaux, et des coproduits végétaux sous forme solide.

8. Méthode d'élevage de larves d'insectes consistant à :
- déposer les larves au stade de jeunes larves sur un substrat tel que défini à l'une des revendications 1 à 6 ;
- incuber les larves pendant 1 à 60 jours, à une température comprise entre 25 et 45°C ;
- récupérer les larves en les séparant des résidus et déjections.

9. Méthode d'élevage selon la revendication 8 **caractérisée en ce que** le substrat n'est pas renouvelé pendant le cycle d'élevage.

10. Méthode selon l'une des revendications 8 ou 9 **caractérisée en ce que** ladite larve est une larve de *Hermetia illucens.*

## Patentansprüche

1. Substrat zum Züchten von Insektenlarven in klumpiger Form und mit halbflüssiger oder pastöser Textur, umfassend:
- lösliche Stoffe, die aus Pflanzentransformationsprozessen stammen, und
- Pflanzennebenprodukte in fester Form.

2. Substrat nach Anspruch 1, wobei die löslichen Stoffe aus einem Pflanzentransformationsprozess zum Produzieren von Stärke, Proteinen, Ethanol oder Palmöl stammen.

3. Substrat nach Anspruch 2, **dadurch gekennzeichnet, dass** die löslichen Stoffe, die aus Palmölproduktionsprozessen stammen, aus Abwässern von Palmölmühlen (POME) gewonnen werden.

4. Substrat nach einem der vorstehenden Ansprüche,
**dadurch gekennzeichnet, dass** die festen Pflanzennebenprodukte aus Weizenprodukten, insbesondere kompaktierter oder nicht kompaktierter Weizenkleie, kompaktierten oder nicht kompaktierten Maisfasern, Zentrifugenkuchen, Palmkernkuchen ausgewählt sind.

5. Substrat nach einem der vorstehenden Ansprüche,
**dadurch gekennzeichnet, dass** es einen Feuchtigkeitsgehalt zwischen 65 und 80 % aufweist.

6. Substrat nach einem der vorstehenden Ansprüche,
**dadurch gekennzeichnet, dass** es zwischen 20 % und 35 % Trockenmasse, zwischen 8 % und 30 % Proteine (bezogen auf die Trockenmasse) und vorzugsweise zwischen 3 % und 16 % Lipide (bezogen auf die Trockenmasse) und/oder zwischen 0 % und 70 % Kohlenhydrate (bezogen auf die Trockenmasse) umfasst.

7. Verfahren zum Herstellen eines Substrats zum Züchten von Insektenlarven in klumpiger Form und mit einer halbflüssigen oder pastösen Textur, umfassend das Mischen von löslichen Stoffen aus Pflanzentransformationsprozessen und Pflanzennebenprodukten in fester Form.

8. Verfahren zum Züchten von Insektenlarven, umfassend:
- Absetzen der Larven in dem Junglarvenstadium auf einem Substrat nach einem der Ansprüche 1 bis 6;
- Inkubieren der Larven 1 bis 60 Tage lang bei einer Temperatur zwischen 25 und 45 °C;
- Sammeln der Larven, wobei sie von Rückständen und Ausscheidungen getrennt werden.

9. Zuchtverfahren nach Anspruch 8, **dadurch gekennzeichnet, dass** das Substrat während des Zuchtzyklus nicht erneuert wird.

10. Verfahren nach einem der Ansprüche 8 oder 9,
**dadurch gekennzeichnet, dass** die Larve eine Larve von *Hermetia illucens* ist.

## Claims

1. Insect larvae rearing substrate in lumpy form and with a semi-liquid or pasty texture comprising:
- solubles derived from plant processing methods, and
- plant co-products in solid form.

2. Substrate according to claim 1, wherein the solubles are derived from plant processing methods for the production of starch, proteins, ethanol or palm oil.

3. Substrate according to claim 2, **characterized in that** the solubles derived from palm oil production methods are obtained from palm oil mill effluents (POME).

4. Substrate according to any of the preceding claims,
**characterized in that** the solid plant co-products are chosen from wheat byproducts, in particular wheat bran, which is or is not compacted corn fibers, which are or are not compacted, centrifugation cakes and palm kernel cakes.

5. Substrate according to any of the preceding claims,
**characterized in that** it has a moisture content of between 65 and 80%.

6. Substrate according to any of the preceding claims,
**characterized in that** it comprises between 20% and 35% dry matter, between 8% and 30% proteins (on dry matter), and preferably between 3% and 16% lipids (on dry matter) and/or between 0% and 70% carbohydrates (on dry matter).

7. Preparation method for an insect larvae rearing substrate in lumpy form and with a semi-liquid or pasty texture comprising the mixture of solubles derived from plant processing methods, and plant co-products in solid form.

8. Method for rearing insect larvae consisting in:
- depositing the larvae at the young larvae stage on a substrate as defined in any of claims 1 to 6;
- incubating the larvae for 1 to 60 days, at a temperature of between 25 and 45°C;
- recovering the larvae by separating them from the residues and droppings.

9. Rearing method according to claim 8, **characterized in that** the substrate is not renewed during the rearing cycle.

10. Method according to any of claims 8 or 9, **characterized in that** the larva is a *Hermetia illucens* larva.
